# EUROPEAN PATENT APPLICATION

(11) **EP 2 296 403 A1**
(43) Date of publication of application: **16.03.2011**
(21) Application number: 09011685.6
(22) Date of filing: 11.09.2009
(51) Int. Cl.: H04W 36/02, H04W 84/04

(54) **Improved data forwarding during handovers involving a relay node**

(71) Applicant: Panasonic Corporation, Kadoma-shi Osaka 571-8501 (JP)
(72) Inventor: Gonsa, Osvaldo, 63225 Langen (DE); Löhr, Joachim, 63225 Langen (DE); Feng, Sujuan, 63225 Langen (DE); Wengerter, Christian, 63225 Langen (DE)
(74) Representative: Grünecker, Kinkeldey, Stockmair & Schwanhäusser Anwaltssozietät

(57) **Abstract**

The invention improves data forwarding during a handover of mobile nodes from a relay node to a target node. Forwarding data is transmitted to the corresponding base station using one or a small number of radio bearers, e.g. said data is assigned to one radio bearer only, thus achieving that said radio bearer transports only the forwarding data of the mobile node doing the handover. A second aspect defines a new header including an indication identifying the enclosed data as belonging to a mobile node doing handover and as data that is to be forwarded to the handover destination node. Additional information on the UE and the handover destination node are also added to the data in order for the base station to be able to forward said data towards its destination. For a third aspect the relay node requests the base station to assign more sub-frames to the uplink.

## Description

### FIELD OF THE INVENTION

The invention relates to a method for forwarding data from a relay node to a target node during a handover of a mobile node, that is attached to the relay node. Furthermore, the invention relates to a relay node and a base station that participate in the invention.

### TECHNICAL BACKGROUND

### LTE - Long Term Evolution

The 3GPP (3^{rd} Generation Partnership Project) launched a study item "Evolved UTRA and UTRAN" better known as "Long Term Evolution (LTE)", which is to be finalized as Release 8 (LTE Rel. 8). The study will investigate means of achieving major leaps in performance in order to improve service provisioning, and to reduce user and operator costs. Out of that and because interworking with other radio access technologies should be possible, the need arose for a new evolved Packet Core Network.

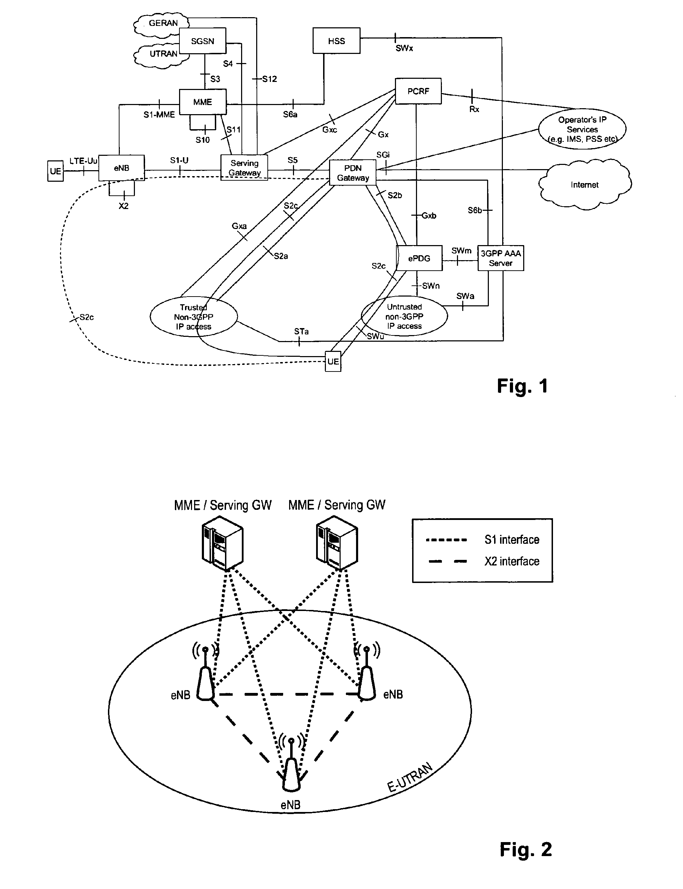

An exemplary representation of the overall architecture is given in Fig. 1, and a more detailed E-UTRAN architecture is given in Fig. 2. The E-UTRAN consists of evolved Node Bs (eNB or eNodeB), providing the E-UTRA user plane (PDCP/RLC/MAC/PHY) and control plane (RRC) protocol terminations towards the mobile node (also referred to in the following as UEs or MNs).

The eNB hosts the Physical (PHY), Medium Access Control (MAC), Radio Link Control (RLC), and Packet Data Control Protocol (PDCP) layers that include the functionality of user-plane header-compression and encryption. It also offers Radio Resource Control (RRC) functionality corresponding to the control plane. Further, it performs many functions including radio resource management, admission control, scheduling, enforcement of negotiated UL-QoS (Quality of Service), cell information broadcast, ciphering/deciphering of user and control plane data, and compression/decompression of Downlink (DL)/Uplink (UL) user plane packet headers. The eNodeBs are normally interconnected with each other by means of the X2-Interface, and to the EPC (Evolved Packet Core) by means of the S1 interface, more specifically to the MME (Mobility Management Entity) via the S1-MME, and to the Serving Gateway (S-GW) by means of the S1-U interface. The S1 interface supports a many-to-many relation between MMEs/Serving Gateways and eNode Bs. The protocols which run between the eNodeBs and the UE are known as the Access Stratum (AS) protocols.

Accordingly, the eNB needs to understand the working status of the UEs in order to appropriately allocate the resources for an efficient communication without wasting resources. Uplink traffic existing in a Universal Mobile Telecommunication System HighSpeed Uplink Packet Access (UMTS HSUPA) and an Evolved UMTS Terrestrial Radio Access (E-UTRA) applies a network-controlled scheduler mechanism controlled by the network side to complete the requirement cited above. For an appropriate resource allocation between various UEs, the UEs need to provide all uplink scheduling information to the scheduler of the eNB. The basic assumption underlying scheduling in LTE is that radio resources are only allocated for transmissions to or from the UE if data is available to be sent or received. In the downlink direction the scheduler in the eNB is obviously aware of the amount of data to be delivered to each UE. However, in the uplink direction, because the scheduling decisions are performed in the eNB and the buffer for the data is located at the UE, buffer status reports (BSR) have to be sent from the UEs to the eNB to indicate the amount of data in the UE that needs to be transmitted in the uplink.

Two types of BSRs are defined in LTE: a long and short BSR. Which one is transmitted depends on the amount of available uplink transmission resources for sending the BSR, on how many groups of logical channels have non-empty buffers, and on whether a specific event is triggered at the UE. The long BSR reports the amount of data for four logical channel groups, whereas the short BSR reports the amount of data for only one logical channel group. Thus, LTE provides suitable signaling to ensure that the eNB has sufficient information about the data waiting in each UE's uplink transmission buffer to allocate corresponding uplink transmission resources in a timely manner.

The S-GW routes and forwards user data packets, while also acting as the mobility anchor for the user plane during inter-eNB handovers and as the anchor for mobility between LTE and other 3GPP technologies (terminating S4 interface and relaying the traffic between 2G/3G systems and Packet Data Network Gateway). For idle state UEs, the S-GW terminates the DL data path and triggers paging when DL data arrives for the UE. It manages and stores UE contexts, e.g. parameters of the IP bearer service, network internal routing information. It also performs replication of the user traffic in case of lawful interception.

The MME is the key control-node for the LTE access-network. It is responsible for idle mode UE tracking and paging procedure including retransmissions. It is involved in the bearer activation/deactivation process and is also responsible for choosing the S-GW for a UE at the initial attach and at time of intra-LTE handover involving Core Network (CN) node relocation. It is responsible for authenticating the user (by interacting with the Home Subscriber Server, HSS). It checks the authorization of the UE to camp on the service provider's Public Land Mobile Network (PLMN) and enforces UE roaming restrictions. The MME is the termination point in the network for ciphering/integrity protection for NAS signaling and handles the security key management. The MME also provides the control plane function for mobility between LTE and 2G/3G access networks with the S3 interface terminating at the MME from the SGSN (Serving GPRS Support Node). The MME also terminates the S6a interface towards the home HSS for roaming UEs.

The Packet Data Network Gateway (PDN-GW or P-GW) provides connectivity for the UE to external packet data networks by being the point of exit and entry of traffic for the UE. A UE may have simultaneous connectivity with more than one PDN-GW for accessing multiple PDNs. The PDN-GW performs UE IP address allocation, policy enforcement, packet filtering (e.g. deep packet inspection, packet screening) for each user in order to map the MN's traffic to an appropriate QoS level, charging support, lawful interception and packet screening. The PGW performs the function management of a HA in case of MIPv6 and of LMA in case PMIPv6 protocols are used for mobility. Another key role of the PDN-GW is to act as the anchor for mobility between 3GPP and non-3GPP technologies.

To summarize the above, in order to support the new E-UTRAN access, the new 3GPP Core Network is mainly separated into three logical entities. At first, in the user plane the PDN-GW is the gateway to the external networks and the global mobility anchor for mobility between 3GPP and non-3GPP access technologies (like CDMA2000, WiMAX or WIFI). Second, another user plane entity, the Serving Gateway, is the mobility anchor for mobility between 3GPP accesses (E-UTRAN, UTRAN, GERAN). Third, a Mobility Management Entity is the control plane entity responsible for the mobility management of mobile terminals moving between different EUTRAN base stations (eNodeBs) and also responsible for the session management.

### Handover Procedure

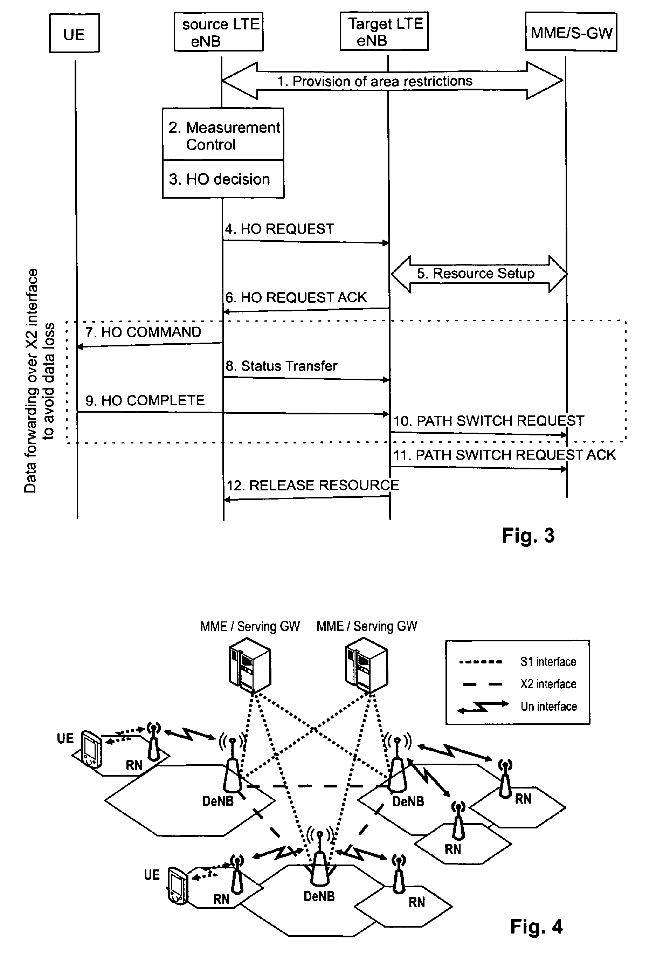

There are two types of handover procedure in LTE for UEs in active mode: the S1-handover procedure and the X2-handover procedure. For intra-LTE mobility, the X2-handover procedure is normally used for the inter-eNodeB handover. However, when there is no X2-interface between the two eNBs, or if the source eNodeB has been configured to initiate handover towards a particular target eNodeB via the S1 interface, then an S1-handover will be triggered. The X2-handover procedure is illustrated in Fig. 3, and is composed of a preparation phase (steps 4 to 6), an execution phase (steps 7 to 9) and a completion phase (after step 9).

Some of the key features of the X2-handover for intra-LTE handover are:
■ The handover is directly performed between two eNodeBs. This makes the preparation phase quick.
■ Data forwarding may be operated per bearer in order to minimize data loss.
■ The MME is only informed at the end of the handover procedure once the handover is successful, in order to trigger the path switch.
■ The release of resources at the source side is directly triggered from the target eNodeB.

For those bearers for which in-sequence delivery of packets is required, the STATUS TRANSFER message (step 8) provides the Sequence Number (SN) and the Hyper Frame Number (HFN) which the target eNodeB should assign to the first packet with no sequence number yet assigned that it must deliver. This first packet can either be one received over the target S1 path or one received over X2 if data forwarding over X2 is used. When it sends the STATUS TRANSFER message, the source eNodeB freezes its transmitter/receiver status - i.e. it stops assigning PDCP SNs to downlink packets and stops delivering uplink packets to the EPC.

Mobility over X2 can be categorized according to its resilience to packet loss: the handover can be said 'seamless' if it minimizes the interruption time during the move of the UE, or "lossless" if it tolerates no loss of packets at all. These two modes use data forwarding of user plane downlink packets. The source eNB may decide to operate one of these two modes on a per-EPS-bearer basis, based on the QoS received over the S1 for this bearer and the service at stake.

For instance, seamless handover may be applied to all radio bearers carrying control plane data, and for user plane radio bearers mapped on RLC Unacknowledged Mode. These types of data are typically reasonably tolerant of losses but less tolerant of delay, e.g. voice services. Seamless handover is therefore designed to minimize complexity and delay, but may experience loss of some data.

On the other hand, lossless handover is applied for radio bearers that are mapped on RLC Acknowledged Mode. Based on the sequence number that is added to PDCP data, it is possible to ensure in-sequence delivery during handover, and even provide a fully lossless handover. This lossless handover function is used mainly for delay-tolerant services such as file downloads where the loss of one PDCP SDU (Service Data Unit) can result in a drastic reduction in the data rate due to the reaction of the Transmission Control Protocol (TCP).

If the source eNodeB selects the lossless mode for one bearer, it will additionally forward over X2 those user plane downlink packets which it has PDCP processed but are still buffered locally because they have not yet been delivered and acknowledged by the UE. These packets are forwarded together with their assigned PDCP SN included in a GTP (GPRS Tunneling Protocol) extension header field. They are sent over X2 prior to the fresh arriving packets from the source S1 path. The mechanisms used for the GTP tunnel establishment is as follows: the source eNB proposes to the target eNodeB in the HANDOVER REQUEST message to establish a GTP tunnel to operate the downlink data forwarding. If the target eNodeB accepts, it indicates in the HANDOVER REQUEST ACK message the tunnel endpoint where the forwarded data is expected to be received. Upon reception of the HANDOVER REQUEST ACK message, the source eNodeB can start to forward the data freshly arriving over the source S1 path towards the indicated tunnel endpoint in parallel to sending the handover trigger to the UE over the radio interface. This forwarded data is thus available at the target eNodeB to be delivered to the UE as early as possible. When forwarding is in operation and in-sequence delivery of packets is required, the target eNodeB is assumed to deliver first the packets forwarded over X2 before delivering the first ones received over the target S1 path once the S1 path switch has been done. The end of the forwarding is signalled over X2 to the target eNodeB by the reception of some 'special GTP packets' called end markers which the S-GW has inserted over the source S1 path just before switching this S1 path; these are then forwarded by the source eNodeB over X2 like any other regular packets In addition, the target eNodeB must ensure that all the packets - including the ones received with sequence number over X2 - are delivered in-sequence at the target side.

### LTE-A Support of Relaying functionality

The above text explained the normal Rel.8 handover procedure. However, for LTE-Advanced (Rel.10 architecture) the use of Relay Nodes is considered as a tool to improve e.g. the coverage of high data rates, group mobility, temporary network deployment, the cell-edge throughput and/or to provide coverage in new areas.

The relay node may be wirelessly connected to a radio-access network via a donor cell. The connection can be
- inband, in which case the network-to-relay link share the same band with direct network-to-user equipment links within the donor cell. Rel. 8 user equipments should be able to connect to the donor cell in this case.
- outband, in which case the network-to-relay link does not operate in the same band as direct network-to-user equipment links within the donor cell.

With respect to the knowledge in the user equipment, relays can be classified into
- transparent, in which case the user equipment is not aware of whether or not it communicates with the network via the relay.
- non-transparent, in which case the user equipment is aware of whether or not it is communicating with the network via the relay.

Depending on the relaying strategy, a relay may be part of the donor cell or may control cells of its own.

In the case the relay is part of the donor cell, the relay does not have a cell identity of its own (but may still have a relay ID. In this case, a relay should preferably support also LTE Rel. 8 user equipments. Smart repeaters, decode-and-forward relays and different types of L2 relays are examples of this type of relaying.

In the case the relay is in control of cells of its own, the relay controls one or several cells and a unique physical-layer cell identity is provided in each of the cells controlled by the relay. From a user equipment perspective there is no difference in accessing cells controlled by a relay and cells controlled by a "normal" eNodeB. The cells controlled by the relay should support also LTE Rel. 8 user equipments. Self-backhauling (L3 relay) uses this type of relaying.

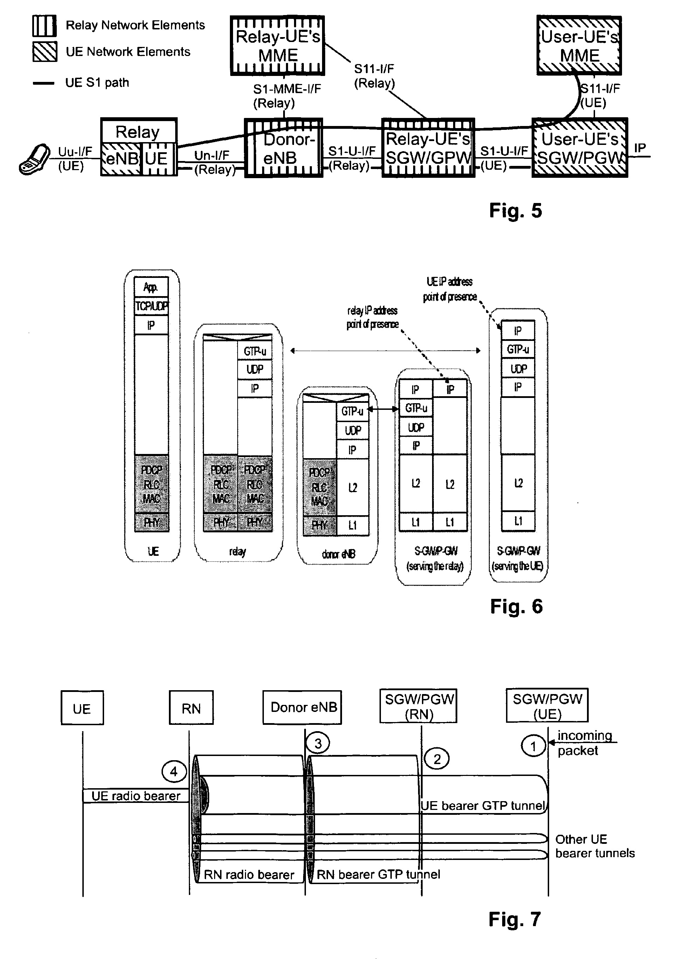

In Fig. 4 and Fig. 5 an exemplary LTE-A system is shown which utilizes relay nodes (RN). The wireless interface between eNode B and RN, which connects a RN with the radio access network, is referred to as Un interface.

At present, various architecture alternatives have been identified for supporting relays in LTE:
■ Alt. 1: Full-L3 relay, transparent for DeNB
■ Alt. 2: Proxy S1/X2
■ Alt. 3: RN bearers terminate in DeNB
■ Alt. 4: S1 UP terminated in DeNB

For alternatives 1-3, the User plane of the S1 interface is terminated at the RN. The particular user plane protocol stack for alternative 1 is depicted in Fig. 6. In said alternative 1 the user plane packets of a UE served by the RN are delivered via the Relay's P/S-GW. The UE's P/S-GW maps the incoming IP packets to the GTP tunnels corresponding to the EPS bearer of the UE and sends the tunneled packets to the IP address of the RN. The tunneled packets are routed to the RN via the Relay's P/S-GW, as if they were packets destined to the RN as a UE.

Fig. 7 illustrates the packet routing in the downlink for the architecture alternative 1, showing the UE and RN bearers and the corresponding GTP tunnels. The IP address of the relay is assigned by the corresponding S-GW/PGW of the RN in the LTE system, as indicated by the IP layer at the RN's S-GW/P-GW.

A packet destined to the UE is classified into UE EPS bearer at the PGW serving the UE according to the corresponding packet filtering rules and encapsulated into the respective GTP tunnel (spanned between SGW/PGW of the UE and the RN). The RN-PGW, which serves the RN, also needs to decide on the UE bearer to RN bearer mapping. The RN bearer type may be indicated in the GTP IP packet sent by the UE-S/PGW. The PGW of the RN receives the GTP tunneled packets addressed to the RN and classifies the packet into RN bearer according to packet filtering rules and encapsulates the packet into a second GTP tunnel, corresponding to the RN bearer. This means that EPS bearers of different UEs connected to the RN with similar QoS are mapped into the same RN bearer. The donor eNB associates the RN GTP tunnel with the corresponding RN radio bearer and sends the packet to the RN over the radio interface. The RN associates the received packet with the UE radio bearer according to the UE GTP tunnel and sends the packet to the UE.

Now with particular reference to Fig. 7, a packet arrives at the S/P-GW of the UE, at which it is mapped to the UE EPS bearer according to filters. The P-GW of the UE sets the RN as destination and the data packet is then routed to the RN-SGW/PGW over the UE bearer GTP tunnel (step (1)). Then, the P-GW of the RN maps the UE bearer tunnel to the RN EPS bearer (step (2)). At the donor eNB the RN radio bearer is associated with the RN bearer tunnel, i.e. a one-to-one mapping between the bearer is performed (step (3)). The relay node associates the UE radio bearer with the UE bearer tunnel (step (4)).

As will be explained in more detail, when applying the above described handover procedure of Fig. 3 to UEs attached to a relay node, some inefficiencies occur in said handover procedure. In order to perform data forwarding during the handover procedure, the source eNB (i.e. the RN) proposes to the target eNB (which may be the Donor eNB to which the RN is connected or another eNB) to establish a GTP tunnel. In case the target eNB is the Donor eNB the GTP tunnel is established between the RN and DeNB over the Un interface. Correspondingly, in case the target eNB is another eNB than the DeNB, the GTP tunnel goes additionally over the X2 interface between DeNB and the target eNB. However, the RN needs to additionally encapsulate the GTP tunnel packets in a RN radio bearer to the DeNB. As can be appreciated from the user plane protocol stack of Fig. 6 and also from the packet delivery illustration of Fig. 7, the DeNB is not aware of the UEs traffic over the Un interface from the RN, since it is encapsulated in RN radio bearers. The DeNB performs a one-to-one mapping at MAC layer level to associate the RN radio bearer to the corresponding RN bearer GTP tunnel to SGW/PGW of the RN. Correspondingly, the DeNB is not aware of the GTP tunnel packet destination being the target eNB (be it the DeNB or another eNB) instead of the SGW/PGW of the RN.

At the SGW/PGW of the RN, the outer RN bearer GTP tunnel is terminated. According to the destination of the inner GTP tunnel, the SGW/PGW of the RN forwards the data towards the Donor eNB. In case the Donor eNB is the target eNB, it keeps the data until the handover procedure is finished to then transmit the forwarded data to the UE. In case the Donor eNB is not the target eNB, the data is further forwarded over the X2 interface to the actual target eNB, and waits for the handover procedure to be completed.

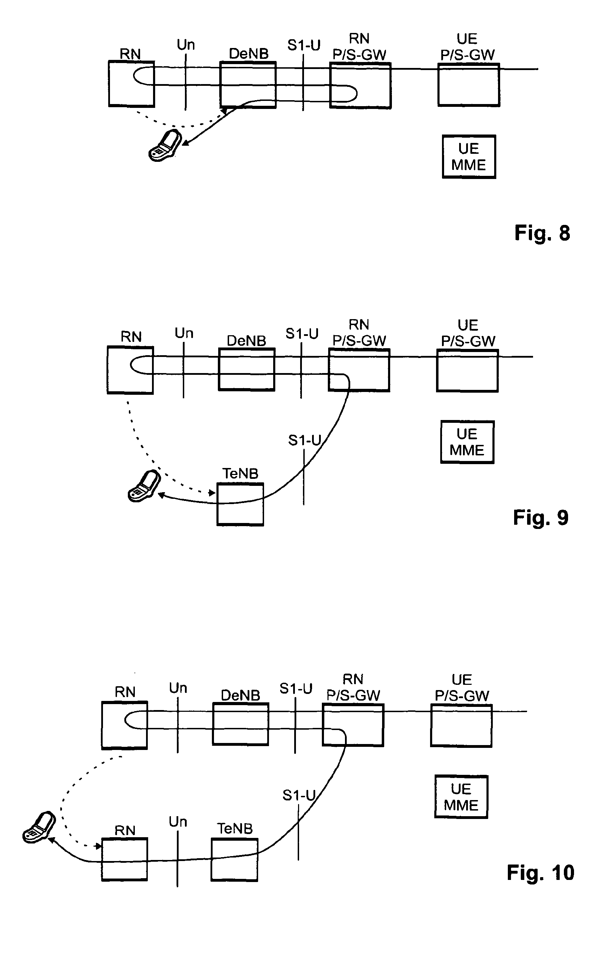

Fig. 8 and 9 show the data path of data being forwarded during a handover procedure as just described. In Fig. 8 the UE attaches to the DeNB, and in Fig. 9 the handover is performed to an eNB different to the DeNB.

As apparent from Fig. 8 and 9, the same data to be forwarded for the handover traverses the Un interface between the RN and the DeNB two times, and in the scenario of Fig. 9 the S1-U interface between the DeNB and the RN's S/P-GW three times. In other words, the data is forwarded from E-UTRAN into the core network (i.e. SGW/PGW) before being forwarded back again into the E-UTRAN. This generates a delay in forwarding the data and wastes system resources in the core network and over the air in the Un interface.

A further problem is that the data is uplink scheduled over the wireless interface Un between the relay node and the Donor eNB. This may cause an extra UL delay over the Un interface for instance when an Uplink opportunity to send the data to the DeNB is not scheduled immediately by the DeNb, due to other uplink data of higher priority or downlink data being scheduled first.

### SUMMARY OF THE INVENTION

Therefore, in view of the above-mentioned problems in the state of the art, one object of the invention is to improve the data forwarding procedure of a handover for a mobile node which is attached to a relay node. In more detail, according to a first more detailed object of the invention, it is to be made sure that the forwarded data is transmitted over the air interface between the relay node and the corresponding base station as fast as possible. A further more detailed object of the invention is to avoid a detour of the forwarded data to the core network.

In addition, it is desirable to avoid many changes to the existing procedures for handovers in LTE. Therefore, the present invention tries to utilize the base signaling procedures for the X2 handover as much as possible.

At least one of the above objects is solved by the subject matter of the independent claims. Advantageous embodiments of the invention are subject-matters of the dependent claims.

According to a first aspect of the invention, data, which is to be forwarded from a relay node to which the mobile node is currently attached to a handover target node, is transmitted from the relay node to the corresponding base station using only one or a small number of radio bearers. Usually, data is multiplexed on the various available radio bearers based on the QoS requirements of the data, i.e. assigned to the radio bearer with the corresponding QCI. Therefore, one particular radio bearer normally transports data from various mobile nodes but with the same or similar QoS requirements. According to the first aspect of the invention however, the relay node assigns the data, which belongs to the UE doing the handover and which is to be forwarded to the handover destination, to one or more radio bearer, without considering the QoS requirements of said data. Consequently, said radio bearer(s) transport data from only one UE, the UE doing the handover, and furthermore, the data may have different QoS requirements that would have usually been transmitted over various radio bearers. By assigning said data to be forwarded during handover to only one radio bearer (and in case of too much data, to more than one radio bearer), it is possible to fill the buffer of said radio bearer faster, and thus to accelerate the scheduling of uplink radio resources for said radio bearer by the scheduler of the corresponding base station.

Said reserved radio bearer might be either an additional radio bearer that is established in addition to other radio bearers that have been used so far for exchanging data between the relay node and the base station. Alternatively, said reserved radio bearer might be selected out of those radio bearers that have been used up to the handover for exchanging data between the relay node and the base station.

Furthermore, said radio bearer might be assigned a high or higher priority than the remaining radio bearers. Thereby, the scheduling by the base station considers said radio bearer, transporting the forwarding data of the mobile node doing the handover, first.

In addition, the new radio bearer(s) might be assigned pre-determined channel identification(s) on which basis the base station may determine that the data being transported via said radio bearer(s) is not usual data, but data to be forwarded because of the handover to the handover destination. In case the handover destination is the base station, the base station may keep the data, when recognizing the pre-determined channel ID (LCID), until the UE attaches to the base station to then forward said data to the UE.

According to a second aspect of the invention, a new header is defined including an indication that identifies the enclosed data as belonging to a UE that is doing handover and as data that is to be forwarded to the handover destination node. Additional information on the UE and the handover destination node may also be added by the relay node in order for the base station to be able to forward said data towards its destination. By using said new header, the above-described detour over the core network is avoided, thus saving resources in the core network and accelerating the data forwarding. In other words, at the base station the one-to-one mapping of radio bearer to S1 bearer is avoided.

Said new header encapsulates the data instead of the GTP header commonly used for data forwarding during a handover. Since the new header is smaller in size than the GTP header, less data is transmitted over the air interface and thus less radio resources are used.

According to a third aspect of the invention, the relay node requests the base station to increase the uplink resources on the air interface between the relay node and the base station., In particular, the base station is requested to assign more subframes to the uplink. By increasing the number of subframes for uplink transmissions, the transmission of said forwarding data is accelerated as well.

One embodiment of the invention provides a method for forwarding data from a relay node to a target node, during a handover of a mobile node, that is attached to the relay node, from the relay node to the target node. The relay node is attached to a first base station. The relay node receives data that is destined to the mobile node and that is to be forwarded to the target node. Then, after starting the handover, the received data is forwarded from the relay node to the first base station using a number of radio bearers that have a higher transmission priority than other radio bearers used by the relay node for transmitting data of other mobile nodes to the first base station.

According to an advantageous embodiment of the invention, the data received at the relay node and destined for the mobile node is forwarded to the first base station using the number of radio bearer. Other data however, corresponding to the other mobile nodes attached to the relay node, is transmitted to the first base station using the other radio bearers.

In a further embodiment of the invention a plurality of radio bearers are configured to transmit data between the relay node and the first base station. The number of radio bearers used to forward the received data to the first base station is selected out of said plurality of radio bearers.

In an alternative embodiment of the invention the number of radio bearers is established additionally to a plurality of radio bearers used to transmit data of the other mobile nodes between the relay node and the first base station.

With regard to another embodiment of the invention the number of radio bearers is established when starting the handover of the mobile node, or when the other radio bearers are established.

Referring now to a different embodiment of the invention, one buffer stores the data that is to be transmitted over each of the number of radio bearers. The relay node informs the first base station on the amount of data in the buffer for each buffer of the number of radio bearers.

According to an advantageous embodiment of the invention, wherein the number of radio bearer depends on the amount of data to be forwarded from the relay node to the target node.

For a another embodiment of the invention the data is forwarded from the relay node to the first base station over a single radio bearer having the highest transmission priority compared to the other radio bearers.

Regarding a further embodiment of the invention, the target node is the first base station, and the number of radio bearer each have a pre-determined channel identity, known to the relay node and the first base station. The first base station receives data from the relay node using the number of radio bearers, and, upon recognizing the pre-determined channel identity of the number of radio bearers over which the data has been received, determines the received data as data to be forwarded during the handover of the mobile node. Also, the received data further comprises information on the target node for forwarding the received data to the target node based on the information on the target node.

In a more detailed embodiment of the invention, the relay node distributes data from the other mobile nodes among the other radio bearers for being transmitted to the first base station. Furthermore, the target node may be the first base station, a further base station or a further relay node. The relay node may be attached to the first base station via a wireless link.

According to another embodiment of the invention, resources for radio bearers between the relay node and the first base station are scheduled by the first base station. The base station increases the resources for uplink transmissions from the relay node to the first base station.

In an embodiment of the invention the resources for radio bearers are divided into a plurality of sub-frames for the uplink transmissions and into a plurality of sub-frames for downlink transmissions from the first base station to the relay node. In order to increase the resources for uplink transmissions, the first base station re-configures a particular number of the sub-frames used for downlink transmissions to be used for uplink transmissions.

Referring to another embodiment of the invention, the relay node requests the first base station to increase the resources for the uplink transmissions from the relay node to the first base station. Advantageously, the request to the first base station to increase the resources for the uplink transmissions is included in a message of the handover transmitted from the relay node to the first base station, preferably a handover request message.

According to a more advantageous embodiment of the invention, upon receiving the request to increase the resources for the uplink transmissions, the first base station decides on whether to increase the resources for the uplink transmissions. In case the first base station decides to increase the resources for the uplink transmissions, the first base station also decides on how much to increase the resources for the uplink transmissions. The relay node is then informed about the decisions.

Regarding a different embodiment of the invention, the information on the decisions taken by the first base station is transmitted from the first base station to the relay node included in a message of the handover, preferably the handover request acknowledge message.

A further embodiment of the invention provides a method for forwarding data from a relay node to a target node, during a handover of a mobile node, that is attached to the relay node, from the relay node to the target node. The relay node is attached to a first base station. The the relay node receives data that is destined to the mobile node and that is to be forwarded to the target node. The relay node adds a forwarding header to the received data to be forwarded to the target node, wherein the forwarding header includes an indication for identifying the received data to which the forwarding header has been added as data to be forwarded during the handover of the mobile node. Furthermore, the relay node adds information on the mobile node to the received data.

Upon receiving said data with the forwarding header and the information on the target node in the first base station, identifying the data as data to be forwarded during the handover of the mobile node.

Furthermore, information on the target node is added to the received data and the first base station forwards the data received from the relay node to the target node based on the indication and on the information on the target node.

In a more detailed embodiment of the invention the forwarding header is a MAC, Media Access Control, header. Furthermore, the indication may be one bit of a plurality of bits of a reserved field of the forwarding header. Optionally, the information on the target node is included in a control element added to the received data. Another control element may be added to the received data comprising information on the mobile node for identifying the forwarding data as being destined to the mobile node.

One embodiment of the invention further provides a forwarding header that is added to data to be forwarded from a relay node to a target node during a handover of a mobile node, attached to the relay node, to the target node. The forwarding header comprises a data forwarding field, including an indication for identifying the received data to which the forwarding header has been added as data to be forwarded during the handover of the mobile node. In a more detailed embodiment, the indication is one bit of a plurality of bits of a reserved field of the forwarding header.

One embodiment of the invention further provides a relay node for forwarding data to a target node during a handover of a mobile node, that is attached to the relay node, from the relay node to the target node. The relay node is attached to a first base station and comprises a receiver to receive data that is destined to the mobile node and that is to be forwarded to the target node. After starting the handover, a transmitter of the relay node forwards the received data to the first base station using a number of radio bearers that have a higher transmission priority than other radio bearers used by the relay node for transmitting data of other mobile nodes to the first base station.

According to an advantageous embodiment of the invention, resources for radio bearers between the relay node and the first base station are scheduled by the first base station and are divided into a plurality of sub-frames for the uplink transmissions and into a plurality of sub-frames for downlink transmissions from the first base station to the relay node. The transmitter of the relay node transmits a request to the first base station to increase the number of subframes for the uplink transmissions within a message of the handover transmitted to the first base station, preferably a handover request message.

With reference to a further embodiment of the invention, the first base station decides on whether to increase the resources for the uplink transmissions and on how much to increase the resources for the uplink transmission. The receiver of the relay node receives information on the decisions taken by the first base station included in a message of the handover, preferably the handover request acknowledge message.

A further embodiment of the invention provides a relay node for forwarding data to a target node, during a handover of a mobile node, that is attached to the relay node, from the relay node to the target node. The relay node is attached to a first base station and comprises a receiver to receive data that is destined to the mobile node and that is to be forwarded to the target node. A processor of the relay node adds a forwarding header to the received data to be forwarded to the target node. The forwarding header includes an indication for identifying the received data to which the forwarding header has been added as data to be forwarded during the handover of the mobile node. The processor of the relay node adds information on the target node to the received data, and a transmitter of the relay node transmits the data including the forwarding header and the information on the target node to the first base station.

Another embodiment of the invention provides a base station for forwarding data received from a relay node to a target node, during a handover of a mobile node, that is attached to the relay node. A receiver of the base station receives data from the relay node using a number of radio bearers that have a higher transmission priority than other radio bearers used by the relay node for transmitting data of other mobile nodes to the base station. The number of radio bearers each have a pre-determined channel identity, known to the relay node and the base station. A processor of the base station recognizes the pre-determined channel identity of the number of radio bearers over which the data has been received, and determines that the received data is data to be forwarded during a handover of the mobile node.

Another embodiment of the invention provides a base station for forwarding data received from a relay node to a target node, during a handover of a mobile node, that is attached to the relay node. A receiver of the base station receives data from the relay node including a forwarding header that includes an indication for identifying the received data as data to be forwarded during the handover of the mobile node. The received data further includes information on the target node. A transmitter of the base station forwards the received data to the target node, based on the indication and on the information on the target node.

### Brief Description of the Figures

In the following the invention is described in more detail with reference to the attached figures and drawings. Similar or corresponding details in the figures are marked with the same reference numerals.
- **Fig. 1**: illustrates the high-level architecture of an LTE system,
- **Fig. 2**: shows an exemplary overview of the overall E-UTRAN architecture of LTE,
- **Fig. 3**: is a signaling diagram for a handover procedure in an LTE system,
- **Fig. 4, 5**: shows an exemplary overview of the overall E-UTRAN architecture of LTE-A including several relay nodes (RN),
- **Fig. 6**: illustrates a user plane protocol stack for one of the alternatives discussed for supporting relay nodes in an advanced LTE system,
- **Fig. 7**: gives an overview of a packet delivery in an LTE system using the user plane protocol stack architecture shown in Fig. 6,
- **Fig. 8**: illustrates the path of data which is to be forwarded from the relay node to the mobile node during a handover of the mobile node between the relay node and the source base station, attaching the relay node,
- **Fig. 9**: illustrates the path of data which is to be forwarded from the relay node to the mobile node during a handover of the mobile node between the relay node and target base station,
- **Fig. 10**: illustrates the path of data which is to be forwarded from the relay node to the mobile node during a handover of the mobile node between the relay node and another relay node,
- **Fig. 11**: shows the user plane protocol stack of a relay node, a DeNB and a RN-GW, according to one embodiment of the invention,
- **Fig.12**: depicts the values of an LCID for the uplink shared channel (UL-SCH),
- **Fig. 13**: illustrates the path of data which is to be forwarded from the relay node to the mobile node during a handover of the mobile node between the relay node and the base station, according to one embodiment of the invention,
- **Fig. 14**: shows the user plane protocol stack of a relay node, a DeNB and a RN-GW, according to another embodiment of the invention,
- **Fig. 15**: shows the user plane protocol stack of a relay node, a DeNB and a RN-GW, according to still another embodiment of the invention,
- **Fig. 16**: illustrates a MAC PDU including a MAC header, various control elements and MAC SDUs,
- **Fig. 17**: illustrates an LCID/E/R/R/F/L MAC PDU sub-header with a 7-bits L-field,
- **Fig. 18**: illustrates the data path of data which is to be forwarded from the relay node to the mobile node during a handover of the mobile node between the relay node and a target base station, according to one embodiment of the invention, and
- **Fig. 19**: shows a signaling diagram for a handover procedure according to one embodiment of the invention.

### Detailed Description

### Definitions

In the following a definition of a few terms frequently used in this document will be provided.

**A mobile node** is a physical entity within a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or correspondent nodes.

**A relay node** is a physical entity within a communication network. On the one hand the relay node may have functionality similar or identical to the functionality of the above defined mobile node. In addition, the relay node may further comprise functionality of a base station.

**A radio bearer** is a service provided to transmit data between two entities connected through a wireless link. A radio bearer transports the packets of an EPS bearer between a UE and an eNodeB, i.e. over the radio interface. An eNodeB stores a one-to-one mapping between a radio bearer ID and an S1 bearer to create the mapping between the two.

The following paragraphs will describe various embodiments of the invention. For exemplary purposes only, most of the embodiments are outlined in relation to a communication system according to 3GPP LTE (Rel. 8) and LTE-A (Rel. 10) discussed in the Technical Background section above. It should be noted that the invention may be advantageously used for example in connection with a mobile communication system such as 3GPP LTE (Rel. 8) and LTE-A (Rel. 10) communication systems previously described, but the invention is not limited to its use in this particular exemplary communication network.

The explanations given in the Technical Background section above are intended to better understand the mostly 3GPP LTE (Rel. 8) and LTE-A (Rel. 10) specific exemplary embodiments described herein and should not be understood as limiting the invention to the described specific implementations of processes and functions in the mobile communication network. Since the seamless and lossless type of handover use data forwarding, the present invention applies to both of them.

The following scenario is assumed for the following explanations of the various embodiments of the invention. A mobile node is currently attached to a relay node, that in turn is attached through a wireless link to a DeNB. The DeNB is connected to the SGW/PGW of the relay node. The SGW/PGW of the RN is part of the core network as well as the SGW/PGW of the UE. The scenario is similar to the one assumed in the background section, according to Fig. 5.

It is further assumed that the UE needs to perform a handover to another point of attachment in the communication system. This new destination may be the DeNB to which the relay node of the mobile is attached, or may be another eNB different to the DeNB. Also, a further relay node may also be the destination for the handover of the MN.

The great part of the following description applies to any of the just mentioned handover destinations. If there are any differences to be considered in said respect, the description will point out the differences between the various handover destinations.

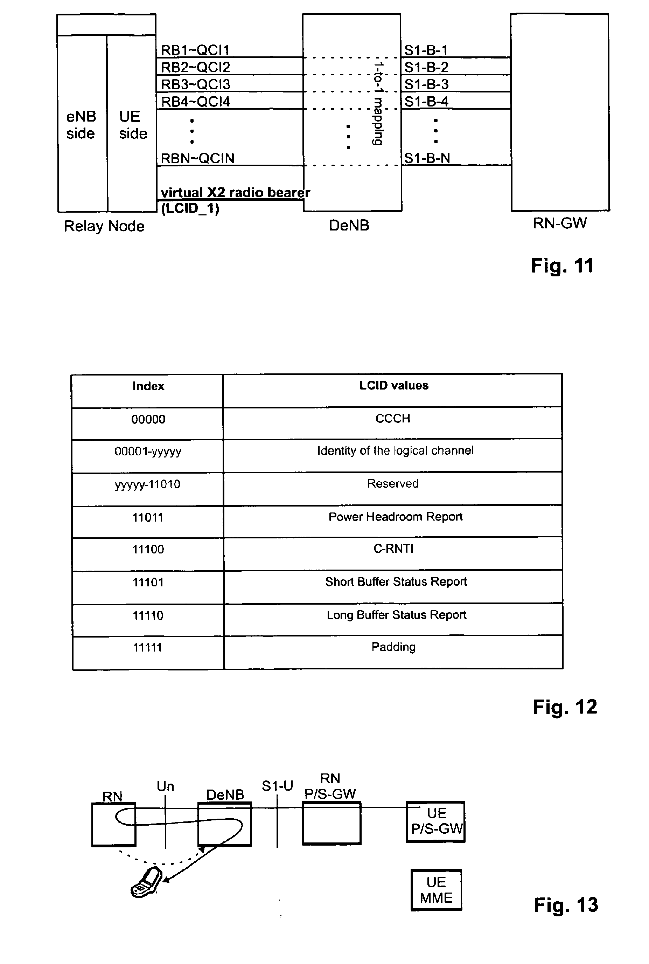

Fig. 11 illustrates the user plane protocol stacks of the relay node and the Donor eNB to which the RN is attached. In particular, N radio bearers, RB1-RBN, provide a connection between the RN and the DeNB. The radio bearers RB1-RBN are mapped one-to-one to corresponding S1 Bearers 1-N. According to the current standardization there are at least nine different radio bearers, each of them associated with a particular QC11-9. These radio bearers are commonly used for exchanging data between the RN and the DeNB. In more detail, data incoming from all mobile nodes is multiplexed into the various radio bearers according to the QoS requirements of the data. Consequently, one particular radio bearer may transport data of different mobile nodes, but with similar QoS requirements.

An EPS bearer is defined as concatenation of a UE radio bearer with an S1 bearer and the S5/S8 bearer (in case of PMIP there is no S5/S8 bearer per se since it is IP connectivity). An EPS bearer has to cross multiple interfaces, e.g. the S5/S8 interface from the P-GW to the S-GW, the S1 interface from the S-GW to the eNB, and the LTE-Uu radio interface from the eNB to the MN. Across each interface, the EPS bearer is mapped onto a lower layer bearer, each with its own bearer identity. Each node must keep track of the binding between the bearer IDs across its different interfaces. For instance, the S-GW stores a one-to-one mapping between an S1 bearer and an S5/S8 bearer. Across both interfaces the bearer may be identified by the GTP tunnel ID. As apparent from Fig. 11, there is a one-to-one mapping between the different bearers. For instance, the one-to-one mapping at the DeNB associates one radio bearer between RN and DeNB with the corresponding S1 bearer between DeNB and RN-GW.

Usually each bearer has an associated QoS Class identifier (QCI), which is characterized by priority, packet delay budget and acceptable packet loss rate. For example, one of the nine already standardized QCIs, QCI-1, has a priority of 2, a packet delay budget of 100ms and a packet error loss rate of 10⁻², and may be used for voice applications. The QCI label for a bearer determines how it is handled in the corresponding eNB. The priority and packet delay budget (and to some extent the acceptable packet loss rate) from the QCI label determine the RLC mode configuration and how the scheduler in the MAC layer handles packets sent over the bearer. As an example, a packet with a higher priority can be expected to be scheduled before a packet with lower priority.

Furthermore, Fig. 11 depicts the radio bearer established between the relay node and the DeNB according to a first embodiment of the invention. According to said first embodiment of the invention, a new bearer is established between the RN and the DeNB, in addition to the radio bearers RB1-N. To said end, the RN starts a bearer establishment procedure with the DeNB, during which the particular "data forwarding" bearer is established and a particular LCID (Logical Channel ID) is assigned to the new bearer service.

The bearer establishment procedure can either be performed on demand every time a handover is initiated or imminent, or on startup when configuring the communication system, e.g. when establishing the standard radio bearers RB1-RBN. For instance, the additional radio bearer may be established right from the beginning, and when a handover is performed and data forwarding is to be applied, the corresponding "data forwarding" bearer is activated between the RN and the DeNB, and data of the UE that is doing the handover can be assigned to said corresponding bearer to be forwarded to the DeNB.

For the above-described embodiment of the invention, there is no need to provide an S1 bearer from the DeNB to the RN-GW, i.e. no one-to-one mapping between the newly created radio bearer between the relay node and the DeNB and a bearer between the DeNB and the RN-GW. Consequently, there is no mapping entry in the DeNB for said new radio bearer.

Once the new radio bearer is established and activated, same may be used exclusively to transmit the data to be forwarded belonging to the UE doing the handover. In other words, said new radio bearer is reserved to be only used for the UE doing the handover. Whereas the remaining radio bearers RB1-RBN will transmit data from various MNs with same or similar QoS requirements, the new "data forwarding" radio bearer will only be used to transmit all the data of the UE that is doing the handover, without considering the particular QoS requirements of said data to be forwarded. Since only data that is transmitted in RLC-Acknowledged Mode is forwarded during a handover, the QoS requirements of the data to be forwarded may be similar, though different QCIs may be used for said data.

A buffer status report is transmitted to the eNB in order to inform the scheduler at the eNB about the amount of data in the different buffers of the radio bearers, including the newly generated/activated "data forwarding bearer". Since all data of the UE that is doing the handover is assigned to the same radio bearer, the buffer will become full and the scheduler will schedule resources for transmitting the data of the "data forwarding" bearer first. As a result, the data to be forwarded during the handover is transmitted in a faster way to the DeNB, and the delay generated by forwarding the data from the source (RN) to the target node (e.g. DeNB) is shortened.

During the bearer establishment mentioned above, the new bearer service is associated with QoS (Quality of Service) requirements, that may be preferably more stringent than the QoS requirements of the other radio bearers RB1-N. For instance, the QoS requirements for said bearer reserved for packet forwarding might demand low delays and no packet loss. The DeNB schedules the resources for the transmission of data from the RN to the DeNB. As already mentioned, the scheduling algorithms in the DeNB consider the QoS requirements coded into the QCI of the particular radio bearer. Correspondingly, the new radio bearer having the highest transmission priority will be scheduled first, i.e. data assigned to said radio bearer are scheduled to be transmitted before any other data via other radio bearers. Advantageously, by configuring the QoS requirements of the new radio bearer to be high transmission priority, the data forwarding during the handover can be accelerated, due to the data being scheduled before other data.

According to a further embodiment of the invention, the new radio bearer is assigned a pre-determined Logical Channel identifier (LCID) known to both the RN and the DeNB, and indicative of forwarding data. In more detail, during bearer establishment the new radio bearer is assigned a pre-determined LCID, with which the radio bearer is identified as being a radio bearer used for transmitting forwarding data from the RN to the DeNB. The pre-determined LCID may be taken e.g. from a particular range of LCIDs out of the possible reserved values yyyyy-11010. Fig. 12 illustrates the values of the LCID for the Uplink - Shared Channel.

Correspondingly, when the DeNB demultiplexes the data received over the "data forwarding" bearer and recognizes the pre-determined LCID, the DeNB determines that the data is data to be forwarded during a handover and does not perform the one-to-one mapping to the bearer between the DeNB and the RN-GW. Accordingly, the forwarding data is not transmitted further to the core network, but is further processed in the DeNB.

This is especially advantageous if the UE performs a handover from the RN to the DeNB. In said case, based on the pre-determined LCID, the DeNB may identify that the data transmitted over said reserved radio bearer is destined to itself, i.e. the DeNB. Furthermore, from the C-RNTI (Cell Radio Network Temporary Identity) the DeNB may not determine to which UE the data belongs, since said C-RNTI identifies the relay node node. Instead, the DeNB identifies the MN with a newly added MAC CE that indicates the C-RNTI of the UE that is used under the Relay Node. This UE C-RNTI is then paired with the C-RNTI that has been assigned by the TeNB to the UE in order to identify to which UE the forwarded data belongs to and as soon as the handover is over or even before, the data may then be transmitted to the corresponding MN.

According to said solution, the detour of the forwarding data over the core network (compare Fig. 8) can be avoided, since the pre-determined LCID allows the DeNB to identify the forwarding data as being destined for itself. This is depicted in Fig. 13 that shows the transmission path for data which is to be forwarded during a handover, according to the current embodiment of the invention, in which a pre-determined LCID allows the DeNB to re-route the forwarding data to the UE instead of to the core network.

Further embodiments of the invention are described in the following. It is not absolutely necessary that the newly created bearer be the bearer with the highest transmission priority. However, the data assigned to said new bearer should be transmitted according to the delay requirements given by the handover. In other words, the data should be transmitted over said reserved bearer without causing too much delay for the handover. Consequently, the new bearer may have alternatively e.g. the second highest transmission priority.

According to a further embodiment of the invention, more than one new radio bearer between the relay node and the DeNB might be created for forwarding the data of the handover. This might prove advantageous or even necessary in case there is a lot of data that has to be forwarded from the RN to the target node. For instance, the mobile node may receive data for several services such as ftp downloads, web browsing or voice conversation at the same time. The buffer for a particular radio bearer is limited, and depending on the amount of data that is to be forwarded it can be more efficient and faster to distribute the forwarding data to two or more radio bearers particularly reserved for forwarding data of a UE that is doing a handover.

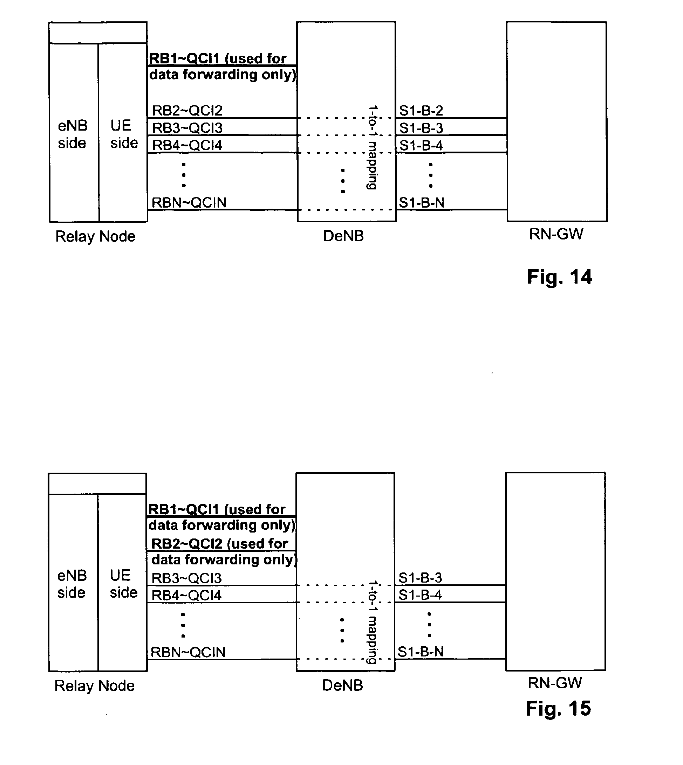

According to a variation of said embodiment of the invention, it is also possible to re-use one or more of the existing radio bearers between the relay node and the DeNB for forwarding data during the handover, instead of generating one or more new radio bearers for said purpose. This embodiment of the invention is illustrated in Fig. 14, in which case radio bearer RB1 with the highest QCI-1 is reserved for forwarding the data from the UE to the DeNB.

Fig. 15 shows a variation of the embodiment illustrated in Fig. 14. Not one, but two existing radio bearers are reserved to transmit the forwarding data during the handover from the relay node to the DeNB. Of course, this is only an example, and the particular configuration of which radio bearers are solely used for the handover may be decided by the operator of the communication system.

In those cases however, the pre-determined LCID may node be used since said bearers are also used for normal data transmission when they are not used exclusively as data forwarding bearers. It is necessary to provide the MAC-F PDU with the corresponding indication for the DeNB to be able to identify the received data as data to be forwarded during the handover of the mobile node.

One advantage of the previously described embodiments of the invention is that it is possible to influence the scheduling for the transmission of the forwarding data over the wireless link from the RN to the DeNB. In summary, by assigning the forwarding data to one particular radio bearer instead of distributing the forwarding data among all radio bearers according to the QoS requirements of the data, it is possible to fill the buffer of the radio bearer faster. The amount of data in the buffer of said radio bearer is reported to the DeNB which then schedules radio resources for the uplink transmission of said forwarding data to the DeNB faster.

In addition, the QCI of said radio bearer can be configured to assure a prioritization of said radio bearer over the remaining radio bearers for the scheduling of uplink resources.

Furthermore, in case the DeNB is the handover destination, the definition of a predetermined LCID for the reserved radio bearer and the particular behaviour of the DeNB, enables the DeNB to avoid a detour of the forwarding data via the core network. By recognizing the pre-determining LCID, the DeNB infers that the data is not to be forwarded further towards the core network, but that it is destined for the DeNB itself.

Overall, additional delays for the handover due to the wireless interface between the RN and the DeNB are minimized by the above-described embodiments of the invention.

According to a further embodiment of the invention, a MAC PDU (Protocol Data Unit) header and further information is added to the data to be forwarded from the RN via the DeNB to the handover target node. Based on said MAC PDU header, the forwarded data is not forwarded to the core network by performing the one-to-one mapping of bearer. Instead, said forwarded data is received in the DeNB, that identifies said data as "forwarding data" of a handover, and transmits said data to the target node (in case the target node is not the DeNB) or keeps said data (in case the target node is the DeNB).

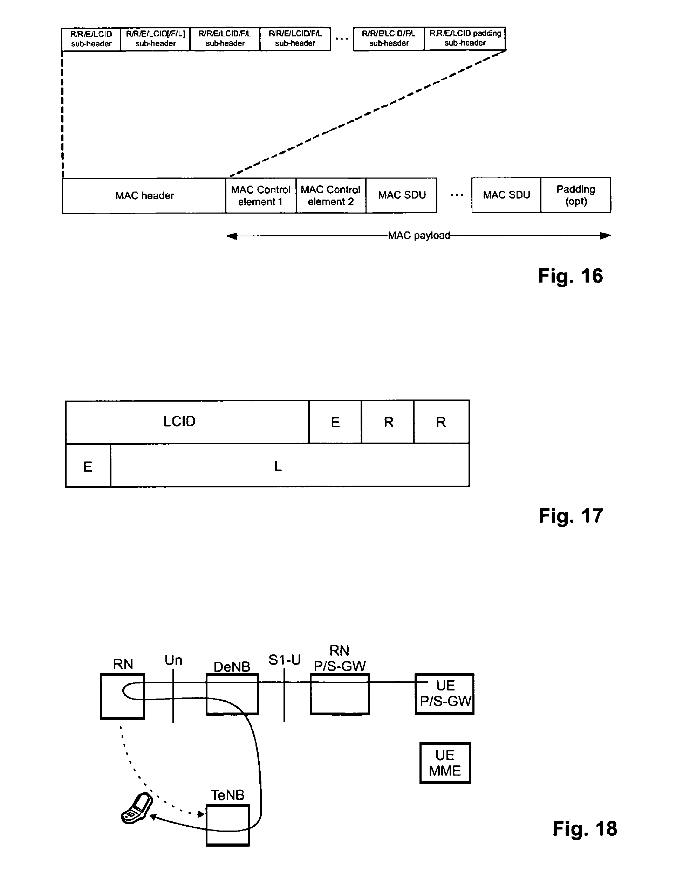

More specifically,a MAC PDU consists of a MAC header, zero or more MAC Service Data Units (MAC SDU), zero or more MAC Control elements, and optionally padding; as illustrated in Fig. 16. Both the MAC header and the MAC SDUs are of variable sizes. A MAC PDU header consists of one or more MAC PDU sub-headers; each sub-header corresponding to either a MAC SDU, a MAC Control element (CE) or to the padding. There are various Control Elements already standardized, such as for Buffer Status Report, for C-RNTI, DRX (Discontinuous Reception) Command and others.

A MAC PDU sub-header corresponding to a MAC Control element consists of the six header fields LCID/E/R/R/F/L, except for the last sub-header in the MAC PDU and for fixed-sized MAC Control elements which consist solely of the four header fields LCID/E/R/R. A MAC PDU sub-header corresponding to padding consists of the four header fields LCID/E/R/R. A MAC PDU sub-header corresponding to a MAC SDU consists of the six header fields LCID/E/R/R/F/L, as apparent from Fig. 17, but for the last sub-header in the MAC PDU which consists solely of the four header fields LCID/E/R/R (not shown).

The Logical Channel ID field of the MAC PDU header identifies the logical channel instance of the corresponding MAC SDU or the type of the corresponding MAC control element or padding. There is one LCID field for each MAC SDU, MAC control element or padding included in the MAC PDU. The Length field (L) indicates the length of the corresponding MAC SDU or MAC control element in bytes. In Fig. 17 an LCID/E/R/R/F/L MAC sub-header with a 7-bits L-field is shown. The Format (F) field indicates the size of the Length field. The Extension (E) field is a flag indicating if more fields are present in the MAC header or not. The E field is set to "1" to indicate another set of at least R/R/E/LCID fields.

MAC PDU sub-headers have the same order as the corresponding MAC SDUs, MAC Control elements and padding. MAC Control elements are always placed before any MAC SDU and padding occurs at the end of the MAC PDU. A maximum of one MAC PDU can be transmitted per Transport Block per UE, and, depending on the physical layer category, one or two Transport Blocks can be transmitted per TTI (Transmission Time Interval) per UE.

According to this embodiment of the invention, a new MAC-F(orwarding) PDU header is created, which includes an indication that the MAC PDU comprises data which is data to be forwarded during a handover. For instance, one of the reserved R-bits of the MAC PDU header (Fig. 17) could be used to mark the MAC PDU as relating to forwarding data or not.

Furthermore, a new MAC control element can be used to indicate the handover destination node. For instance, said new MAC control element may indicate the DeNB, Target eNB (TeNB) or Target RN to which the UE is handing over. In particular, the TEID of the Target eNB is included in said new MAC control element, which allows the DeNB to forward the MAC PDU directly to the Target eNB.

Another MAC PDU Control Element can be defined and added to the MAC PDUs, that includes the MN-identity, e.g. the C-RNTI. This allows the DeNB to identify to which UE the received data belongs.

As described in the Background Chapter, GTP Tunnelling is usually applied when performing the X2 data forwarding during a handover of a UE. Therefore, a GTP header is usually added by the RN to data that is to be forwarded indicating the Tunnel Endpoint ID for the target node to identify the incoming data as belonging to the UE. According to the currently-described embodiment of the invention, the GTP-header is no longer used and instead can be substituted by the MACCE indicating the handover destination node, and by including the forwarding data indication in one of the R-bits of the MAC-F PDU header.

Correspondingly, data arrives at the relay node which is destined to the UE, that is doing a handover. The data is to be forwarded to the handover destination node. The relay node generates MAC PDUs with data only from those PDCP SDUs that are buffered in the RN and that belong to the UE that is doing the handover. The above-described MAC-F PDU header with forwarding data indication and the two Control Elements comprising the information on the UE and the target node are added to form the MAC PDU.

The thus formed MAC PDUs including the data to be forwarded are transmitted to the DeNB, that processes the MAC header and learns that the data included in the MAC SDUs is data to be forwarded to the target node during a handover of the MN. By using the information in the control elements of the MAC PDUs, the DeNB may forward the data to the handover destination, such as another Target eNB or Target RN. The Target eNB or Target RN may then transmit said data to the UE, upon the handover of the mobile node is finished.

In case the handover destination is the DeNB, the DeNB keeps the forwarding data and awaits the end of the handover to then transmit said data to the identified MN. In said case, instead of adding a Control Element indicating the DeNB as handover destination, alternatively no Control Element may be added to the MAC PDUs, from which the DeNB may infer that the MAC PDU is actually destined for itself.

The result of using the MAC-F PDU header instead of the usual X2 GTP Tunnel header, is that the data, to be forwarded during a handover, is not transmitted to the Core Network but can be directly forwarded to the Target Node. Fig. 18 illustrates the optimized data forwarding path, and in particular the DeNB transmitting the forwarding data to the Target eNB, which then further transmits the data to the UE after handover is terminated.

As apparent, the MAC-F PDU header serves a similar purpose to the pre-determined LCID described previously in connection with another embodiment of the invention. Both allow the DeNB to recognize the MAC PDU as data which belongs to a handover and which is to be forwarded to the handover destination node, thus avoiding a detour of the data transmission path via the core network. Whereas the embodiment using the predetermined LCID is applicable when the handover destination is the DeNB, the embodiment using the MAC-F PDU can be used for any handover destination.

The GTP header is bigger than the MAC-F PDU header including the two CEs. A usual GTP header has 8 bytes, whereas the MAC-F PDU header and the corresponding CEs is smaller. Therefore, substituting the GTP tunnel header with the MAC-F PDU header reduces the size of the MAC PDUs and thus reduces the resource usage for the air interface.

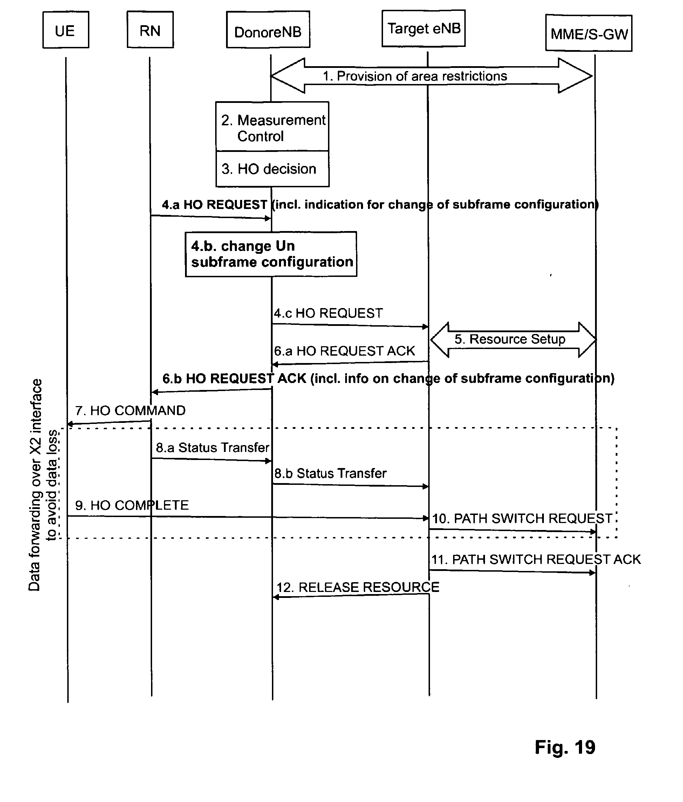

According to a further embodiment of the invention, the RN requests the DeNB to increase uplink resources in order to accelerate the transmission of data, belonging to data forwarding during a handover, from the RN to the DeNB. Fig. 19 discloses the handover signaling according to this further embodiment of the invention. At the HO preparation phase, the RN will request the DeNB to change the uplink subframe configuration to allocate more subframes in the uplink. The subframe configuration indicates the number of subframes which are to be used for downlink and uplink. For instance, it may be assumed that a frame consists of 10 subframes and 4 of them are used for other purposes than uplink and downlink transmission. Then, the remaining 6 subframes are assigned by the DeNB to be either used for downlink or uplink transmissions. In order to accelerate the uplink transmissions over the air interface, the DeNB is requested to assign more subframes for the uplink. For instance, if 2 subframes were initially assigned for uplink transmissions, the new subframe configuration should allow the RN to use e.g. 5 out of the 6 subframes for uplink transmission.

To said end, the Handover Request message is adapted to transport an "IncreaseULSubFrame Allocation" indication. When the DeNB receives said "IncreaseULSubFrame Allocation" indication, it decides on whether the number of UL subframes may be increased. Depending on the available resources on the air interface and depending on the amount of downlink data waiting at the DeNB to be transmitted to the RN, the DeNB decides on whether to increase and, if so, how much to increase the UL subframes. In accordance with the decision taken, the DeNB will then transmit "IncreaseULSubFrame-Allocation ACK" with the new number of UL subframes with the sub-frames IDs piggy-backed on the Hanover Request Acknowledge message to the relay node. If no increase of the UL subframes is possible, DeNB will transmit an "IncreaseULSubFrame_Allocation NACK" message within the HO Request Acknowledge message to the relay node.

Assuming that the number of subframes for uplink transmissions is increased, the RN, upon receiving the Handover Request Acknowledge message, processes the "IncreaseULSubFrame_Allocation ACK" with the new number of UL subframes with the sub-frames IDs, and may then transmit the forwarding data of the UE doing the handover to the DeNB using more subframes and thus faster. The data forwarding over the air interface is thus accelerated.

The changed subframe configuration can be reset after the data forwarding of the handover is finished and the MN's handover is finished.

In the previous description, three basic embodiments of the invention with various variations thereof have been explained in detail.

The first basic embodiment refers to exclusively using a single or more radio bearers between the RN and the DeNB for transmitting the forwarding data destined to the UE doing the handover from the RN to the DeNB. Instead of multiplexing data of various mobile nodes to the available radio bearers based on the QoS requirements, the embodiments allows to transmit the forwarding data for one mobile node over one or more radio bearer. In other words, said reserved radio bearer(s) transport data with various QoS requirements, however said data belongs to only that UE that is doing the handover. One advantage thereof is that by filling the buffer corresponding to said reserved radio bearers faster, the scheduling of the said radio bearer is accelerated. According to a second basic embodiment, a MAC-F PDU header is defined with additional information on the UE and handover destination as necessary. The MAC-F PDU header indicates that the data in the MAC SDUs of said MAC PDU belongs to a UE that is doing a handover including data forwarding. Based on the additional information, in the MAC PDU the DeNB may then forward the data further to its destination, while avoiding the detour over the core network.

The third basic embodiment of the invention relates to increasing the number of UL subframes being usable by the RN to transmit data to the DeNB. By using more subframes for transmitting UL data to the DeNB, it is possible to accelerate the overall data forwarding and thus the handover procedure.

Though the above three basic embodiments of the invention have been described separately, it is also possible to combine two or the three embodiments. For instance, the transmission of uplink data over the air interface may be accelerated by increasing the UL subframes and in addition by transmitting the data over a single radio bearer. In addition, by using the MAC-F PDU header for, the DeNB is able to directly forward the data to the handover destination, thus avoiding the detour via the core network. A further optimization can be achieved by assigning a high, preferably the highest, transmission priority to said single radio bearer.

Another example combination is to use the pre-determined LCID, in case the handover destination is the DeNB. In said case, the MAC-F PDU header may either be used or not. When using the MAC-F PDU header instead of the GTP tunnel header the MAC PDU sizes can be decreased thus using less air resources. If the MAC-F PDU header is not used, the detour over the core network is still avoided by processing the pre-determined LCID in the DeNB, which may determine that the DeNB is the handover destination, thus keeping the data and not forwarding same further towards the core network.

Starting from the above-described combination examples, it is obvious for a skilled person to combine the above mentioned basic embodiments, and also the various variations of the basic embodiments, with one another, to achieve one or more of the advantages provided by same. It should be noted that the individual features of the different embodiments of the invention may individually or in arbitrary combination be subject matter to another invention. The present embodiments are, therefore, to be considered in all respects to be illustrative and not restrictive.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

1. A method for forwarding data from a relay node to a target node, during a handover of a mobile node, that is attached to the relay node, from the relay node to the target node, wherein the relay node is attached to a first base station, the method including the steps of:
receiving at the relay node data that is destined to the mobile node and that is to be forwarded to the target node, and
after starting the handover, forwarding the received data from the relay node to the first base station using a number of radio bearers that have a higher transmission priority than other radio bearers used by the relay node for transmitting data of other mobile nodes to the first base station.

2. The method according to claim 1, wherein the data received at the relay node and destined for the mobile node is forwarded to the first base station using the number of radio bearer, wherein other data, corresponding to the other mobile nodes attached to the relay node, is transmitted to the first base station using the other radio bearers.

3. The method according to claim 1 or 2, wherein a plurality of radio bearers are configured to transmit data between the relay node and the first base station, and wherein the number of radio bearers used to forward the received data to the first base station is selected out of said plurality of radio bearers, or the number of radio bearers is established additionally to a plurality of radio bearers used to transmit data of the other mobile nodes between the relay node and the first base station.

4. The method according to one of claims 1 to 3 wherein the target node is the first base station, and wherein the number of radio bearer each have a predetermined channel identity, known to the relay node and the first base station, the method comprising the following step performed by the first base station:
receiving data from the relay node using the number of radio bearers,
upon recognizing the pre-determined channel identity of the number of radio bearers over which the data has been received, determining the received data as data to be forwarded during the handover of a mobile node.

5. The method according to one of claims 1 to 4, wherein resources for radio bearers between the relay node and the first base station are scheduled by the first base station, the method further comprising the following step performed by the first base station:
increasing the resources for uplink transmissions from the relay node to the first base station.

6. The method according to claim 5, wherein the resources for radio bearers are divided into a plurality of sub-frames for the uplink transmissions and into a plurality of sub-frames for downlink transmissions from the first base station to the relay node, and the step of increasing the resources for uplink transmissions includes the following step performed by the first base station:
re-configuring a particular number of the sub-frames used for downlink transmissions to be used for uplink transmissions.

7. The method according to one of claims 1 to 6, further comprising the steps of claim 8 or 9.

8. A method for forwarding data from a relay node to a target node, during a handover of a mobile node, that is attached to the relay node, from the relay node to the target node, wherein the relay node is attached to a first base station, the method including the steps of:
receiving at the relay node data that is destined to the mobile node and that is to be forwarded to the target node,
adding by the relay node a forwarding header to the received data to be forwarded to the target node, wherein the forwarding header includes an indication for identifying the received data to which the forwarding header has been added as data to be forwarded during the handover of the mobile node,
adding by the relay node information on the mobile node to the received data,
upon receiving said data with the forwarding header and the information on the mobile node in the first base station, identifying the data as data to be forwarded during the handover of the mobile node.

9. The method according to claim 8, wherein another control element is added to the received data comprising information on the target node for forwarding the received data to the target node based on the information on the target node in the another control element.

10. The method according to claim 8 or 9, further comprising the steps of one of claims 1 to 6.

11. A forwarding header that is added to data to be forwarded from a relay node to a target node during a handover of a mobile node, attached to the relay node, to the target node, the forwarding header comprising the following field:
data forwarding field, including an indication for identifying the received data to which the forwarding header has been added as data to be forwarded during the handover of the mobile node.

12. A relay node for forwarding data to a target node during a handover of a mobile node, that is attached to the relay node, from the relay node to the target node, wherein the relay node is attached to a first base station, the relay node comprising:
a receiver adapted to receive data that is destined to the mobile node and that is to be forwarded to the target node,
after starting the handover, a transmitter is adapted to forward the received data to the first base station using a number of radio bearers that have a higher transmission priority than other radio bearers used by the relay node for transmitting data of other mobile nodes to the first base station.

13. The relay node according to claim 12, wherein resources for radio bearers between the relay node and the first base station are scheduled by the first base station and are divided into a plurality of sub-frames for the uplink transmissions and into a plurality of sub-frames for downlink transmissions from the first base station to the relay node, wherein the transmitter is adapted to transmit a request to the first base station to increase the number of subframes for the uplink transmissions within a message of the handover transmitted to the first base station, preferably a handover request message.

14. A relay node for forwarding data to a target node, during a handover of a mobile node, that is attached to the relay node, from the relay node to the target node, wherein the relay node is attached to a first base station, the relay node comprising:
a receiver adapted to receive data that is destined to the mobile node and that is to be forwarded to the target node,
a processor adapted to add a forwarding header to the received data to be forwarded to the target node, wherein the forwarding header includes an indication for identifying the received data to which the forwarding header has been added as data to be forwarded during the handover of the mobile node,
the processor further adapted to add information on the target node to the received data,
a transmitter adapted to transmit the data including the forwarding header and the information on the target node to the first base station.

15. A base station for forwarding data received from a relay node to a target node, during a handover of a mobile node, that is attached to the relay node, the base station comprising:
a receiver adapted to receive data from the relay node including a forwarding header that includes an indication for identifying the received data as data to be forwarded during the handover of the mobile node, the received data further including information on the target node, and
a transmitter adapted to forward the received data to the target node, based on the indication and on the information on the target node.
